# EUROPÄISCHE PATENTSCHRIFT

(11) **EP 1 868 762 B1**
(45) Veröffentlichungstag und Bekanntmachung des Hinweises auf die Patenterteilung: **23.06.2010**
(21) Anmeldenummer: 06707241.3
(22) Anmeldetag: 24.02.2006
(51) Int. Cl.: B23K 11/25

(54) **SCHWEISSANORDNUNG ZUM VERBINDEN VON WERKSTÜCKEN DURCH WIDERSTANDS- ODER PRESSSCHWEISSEN**
WELDING ARRANGEMENT FOR CONNECTING WORKPIECES BY RESISTANCE OR PRESS WELDING
SYSTÈME DE SOUDAGE POUR JOINDRE DES PIÈCES PAR SOUDAGE PAR RÉSISTANCE OU PAR SOUDAGE PAR PRESSION

(30) Priorität: 13.04.2005 DE 102005017797
(43) Veröffentlichungstag der Anmeldung: 26.12.2007
(73) Patentinhaber: Fachhochschule Jena, 07745 Jena (DE)
(72) Erfinder: BOLLE, Jürgen, 07743 Jena (DE); BLIEDTNER, Jens, 07745 Jena (DE); ZWEINERT, Klaus, 99891 Tabarz (DE); ECKE, Wolfgang, 07747 Jena (DE); WILLSCH, Reinhardt, 37743 Jena (DE); BÜRGER, Wolfgang, 99089 Erfurt (DE)
(74) Vertreter: Niestroy, Manfred
(86) Internationale Anmeldenummer: PCT/EP2006/001698
(87) Internationale Veröffentlichungsnummer: WO 2006/108468

(56) Entgegenhaltungen:
- EP-A- 1 148 324
- EP-A- 1 291 113
- DE-A1- 10 060 055
- DE-A1- 19 523 808

## Beschreibung

### Gebiet der Erfindung

Die Erfindung betrifft eine Schweißanordnung zum Verbinden von Werkstücken durch Widerstands- oder Preßschweißen mit flüssiger Phase, welche Sensoren besitzt, mit deren Hilfe die Schweißpunktqualität und die Güte der Schweißverbindung ermittelt und eine effektive und zuverlässige Prozeßüberwachung und Prozeßsteuerung auch in einer Klein- und Großserienfertigung ermöglicht werden.

### Stand der Technik

In der Praxis werden gegenwärtig verschiedene Qualitäts- und Prozeßüberwachungsverfahren angewandt, welche auf unterschiedlichen Meßprinzipien beruhen. So werden Strom-, Spannungs- und Widerstandmessungen, die Messung des Elektrodenweges oder Kraftmessungen an den Elektroden vorgenommen, um zu Kennwerten für die Beurteilung der Güte der Schweißpunkte oder -linsen zu kommen. Auch kann dazu eine Ultraschallprüfung während des Schweißvorganges durchgeführt werden.

Die Qualität und auch die Festigkeit von Schweißverbindungen, welche durch Widerstandschweißen hergestellt wurden, hängen unter anderen auch von der Größe (z.B. dem Durchmesser) der sich ausbildenden Schweißlinse ab, wobei die Geometrie dieser Linse beispielsweise von der eingebrachten Energie, von den Bedingungen der Wärmeableitung im Bauteil und auch in den Elektroden und auch von der Oberflächenbeschaffenheit sowie der Schweißlage bei den Werkstücken ab.

Aus der DE 100 60 055 A1 ist ein Meßsystem zur Prozeßüberwachung und Qualitätssicherung bei Widerstandschweißverfahren für mindestens eine Schweißstation bekannt, wobei die während der Stromflußphase meßbaren Kraftsignale analysiert werden. Dabei werden die Kraftschwankungen an den Elektrodenhaltern mit Bezug zum Schweißstromsignal halbwellenweise erfaßt und der zeitliche Verlauf dieser Schwankungen als Hüllkurve des Kraftsignals mit einer Sollkurve verglichen. Es wird der zeitabhängige Anstieg der Kraftschwankungen, welche etwa proportional dem verflüssigten Volumen in der Schweißlinse sind, während der Stromflußphase erfaßt und zur Bewertung der Schweißlinsengröße und damit der Schweißqualität herangezogen.

In der DE 195 23 808 ist eine elektrische Schweißzange mit Lichtsensor beschrieben, welcher als ein Reflektor an einem Schweißzangenelement angebracht ist. Über einen Lichtleiter wird ein Lichtbündel auf den Reflektor eingestrahlt und das reflektierte Licht wird durch einen weiteren Lichtleiter an einen Empfänger weitergeleitet. Durch die Elektrodenkraft wird das Schweißzangenelement, an welchem der Reflektor angeordnet ist, verformt und damit die Lage der Reflektorebene verändert. Die durch den Empfänger aufgenommene Lichtmenge ist eine Funktion der Größe und Änderung der Verformung des Schweißzangenelementes und damit eine Funktion der Elektrodenkraft.

Es sind weiterhin auch faseroptische Sensoren bekannt, welche aus optischen Lichtleitfasern auf Quarzglasbasis hergestellt sind, in welche Interferenzgitter, sogenannte Bragg-Gitter, integriert sind. Ein solches Gitter ist eine periodische Brechungsindexstruktur, welche mit einem UV-Laser beispielsweise in eine Monomodefaser entlang einer Strecke von einigen Millimetern eingeschrieben wird. Die so geschaffenen Interferenzgitter wirken dann wie schmalbandige Filter, die Licht einer bestimmten Wellenlänge (Bragg-Wellenlänge) oder eines bestimmten Wellenlängenbereiches reflektieren. Diese Wellenlänge des reflektierten Lichtes ist abhängig von der Gitterperiode des Interferenzgitters und vom Brechungsindex der Faser. Bei einer Verformung (Dehnung oder Stauchung) eines zu untersuchenden Werkstückes oder Teiles, an dem ein derartiger Sensor fest angeordnet ist, verändert sich infolge der Verformung der Lichtleitfaser auch die Gitterperiode des Bragg-Gitters und damit auch die Wellenlänge oder der Wellenlängenbereich des reflektierten Lichtes, welche z. B. mit einem Gitterspektrometer bestimmt werden kann.

In EP 1 291 113 A, die als nächstliegender Stand der Technik gesehen werden kann, sind eine Schweizzange sowie ein Verfahren zur Beurteilung der Qualität einer Schweißverbindung beschrieben. Dabei handelt es sich um eine Schweizzange zum elektrischen Widerstandsschweißen mit zwei Elektroden, von denen mindestens eine an einem Elektrodenarm befestigt ist, mit Mitteln zum Bewegen von mindestens einem Elektrodenarm, mit Mittel zum Erzeugen des Schweißstroms und mit einem Kraftsensor zur Erfassung eines Kraft-Ist-Wertes zwischen den beiden Elektroden.

Um mit Hilfe eines Kraftsensors eine zuverlässige Messung der Elektrodenkraft bzw. eine Beurteilung der Qualität einer Schweizverbindung zu ermöglichen, ist der Kraftsensor an einer Elektrodenarmhalterung angeordnet. Das weiterhin beschriebene Verfahren dient der Beurteilung der Qualität einer Schweißverbindung unter Verwendung dieser Schweißzange.

### Beschreibung der Erfindung

Der Erfindung liegt die Aufgabe zu Grunde, eine Schweißanordnung zum Verbinden von Werkstücken durch Widerstands- oder Preßschweißen zu schaffen, mit welcher mit einfachen Mitteln und unter Berücksichtigung von sich während des Schweißvorganges verändernder Einflußgrößen ein zuverlässiges Prozeßüberwachungssystem für das Widerstandsschweißen in der Klein- und Großserienfertigung und eine sichere Kontrolle der Güte der durchgeführten Schweißungen realisierbar ist.

Erfindungsgemäß wird diese Aufgabe mit einer nach dem Oberbegriff des ersten Patentanspruches gestalteten Schweißanordnung mit den im kennzeichnenden Teil dieses Anspruchs offenbarten Mitteln gelöst. Die Erfindung wird auch durch die Merkmale des unabhängigen Anspruchs 10 gelöst. In den Unteransprüchen sind weitere Ausführungen und Ausgestaltungen der Erfindung dargelegt.

So ist es vorteilhaft, wenn der mindestens eine Fasergitter-Verformungssensor als ein Beugungsgitter in Form eines Bragg-Gitters mit periodischer Brechungsindex-Struktur in einem Lichtwellenleiter integriert ist, und daß dieser Fasergitter-Verformungssensor optisch mit der Empfängeranordnung eines Polychromators verbunden ist.

Zur Überwachung mehrerer Schweißanordnungen und zur Realisierung von Möglichkeiten der Steuerung der Schweißvorgänge ist es vorteilhaft, wenn mehrere Fasergitter-Verformungssensoren in einem Lichtwellenleiter integriert sind, wenn die Fasergitter-Verformungssensoren eines Lichtwellenleiters an Teilen (bzw. Glieder) mehrerer Einrichtungen der Schweißanordnung fest angebracht sind und wenn die Fasergitter-Verformungssensoren mit der Empfängeranordnung verbunden sind.

Die Möglichkeit der Überwachung einer Anzahl von unterschiedlichen Schweißanordnungen ist in einfacher und sicherer Weise realisierbar, wenn die Interferenzgitter eines Lichtwellenleiters eine gleiche oder unterschiedliche Gitterteilung aufweisen. Dabei kann die Gitterteilung auch codiert sein, d.h. innerhalb einer Teilung kann der Abstand der Teilstriche unterschiedlich sein.

So ist es ferner auch im Sinne einer hohen Präzision der Messung von Vorteil, wenn der mindestens eine Fasergitter-Verformungssensor in einem Monomode-Lichtwellenleiter integriert ist.

Zur Realisierung einer effektiven Kontrolle und Steuerung einer Schweißanordnung für das elektrische Widerstandsschweißen oder für das Preßschweißen von Werkstücken kann es günstig sein, daß die Einrichtung eine elektrische Schweißzange ist, die eine Halterung und ein Paar in der Halterung angeordnete, Elektroden tragende Schweißzangenarme besitzt, wobei ein Schweißzangenarm eines jeden Paares relativ zum anderen Schweißzangenarm schwenkbar ist und während des Schweißvorganges mit einer definierten Kraft P gegen zwischen den Elektroden angeordnete, zu verbindende Werkstücke angedrückt ist.

Eine weitere vorteilhafte Ausführung der Erfindung ergibt sich, wenn die Einrichtung mindestens eine U-förmige Halterung mit jeweils einem Paar Elektroden aufnehmender Schenkel umfaßt, wobei ein Schenkel eines Paares in einer Führung eine Aufnahme für eine Elektrode besitzt und wenn die Aufnahme in der Führung relativ zum anderen Schenkel des Paares im Wesentlichen senkrecht verschiebbar und während des Schweißvorganges gegen die zwischen den Elektroden angeordneten, zu verbindenden Werkstücke mit einer definierten Kraft P angedrückt ist.

Die Fasergitter-Verformungssensoren können als Dehnungs- oder als Stauchungssensoren angewendet werden, je nach dem ob sie im Dehnungs- oder Stauchungsbereich des unter einer Krafteinwirkung verformten Schweißzangenarmes angeordnet sind.

So ist es auch vorteilhaft, wenn in der Auswerteeinheit Mittel vorgesehen sind, mit denen durch Ableitung von Steuergrößen aus dem ermittelten, zeitabhängigen Kraftsignal P(t) eine Beeinflussung der Qualität der Schweißung durch Regelung insbesondere des Schweißstroms und der Kraft P während oder nach dem Schweißvorgang realisierbar ist. Diese Mittel können vor allem elektronische Bauelemente und - gruppen sein.

Die Anwendung der Fasergitter-Verformungssensoren zur zeitbezogenen Messung und Überwachung von Verformungen von Teilen an Schweißanordnungen für das elektrische Punktschweißen oder für Preßschweißen erfolgt zwecks Ermittlung der Schweißpunktqualität und der Güte der Schweißverbindung.

### Kurze Beschreibung der Zeichnungen

Die Erfindung soll nachstehend an einem Ausführungsbeispiel näher erläutert werden. In den zugehörigen Zeichnungen zeigen
- Fig.1: in vereinfachter Darstellung einen Fasergitter-Verformungssensor an einem Bauteil,
- Fig.2: eine Einrichtung einer Schweißanordnung mit mehreren Halterungen und Schweißzangenarmen,
- Fig.3: eine Halterung mit einem festen und einem schwenkbaren Schweißzangenarm,
- Fig.4: eine Halterung mit einem festen Arm und einem verschiebbaren Teil, und
- Fig.5: eine Lichtleitfaser mit mehreren integrierten Fasergitter-Verformungssensoren.

### Ausführliche Beschreibung der Zeichnung

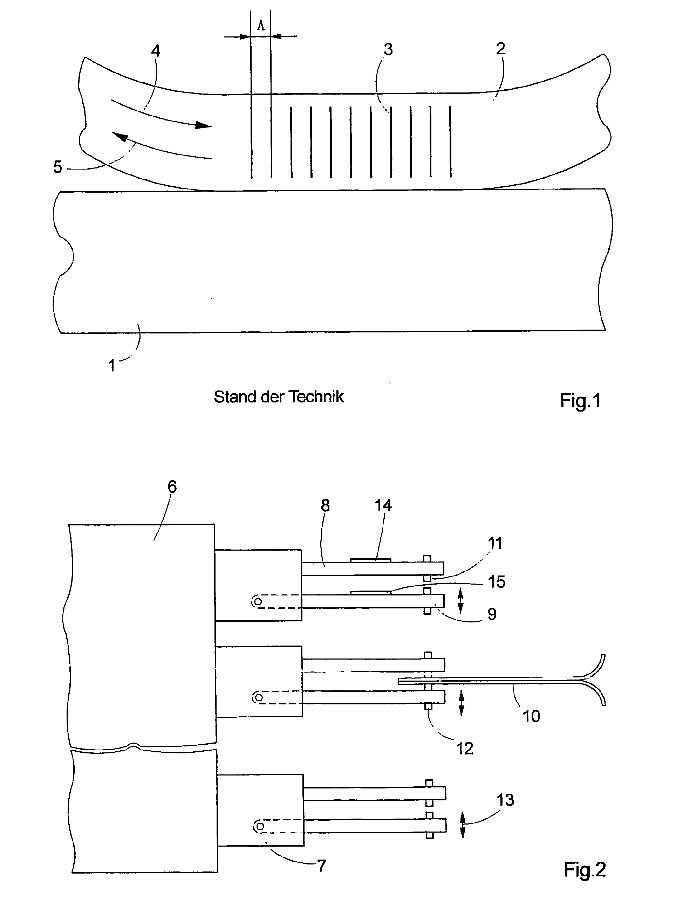

In Fig.1 ist stark vereinfacht der grundsätzliche Aufbau eines Fasergitter-Verformungssensors gemäß dem Stand der Technik dargestellt, welcher an einem Bauteil 1, dessen Verformungen zu ermitteln sind, beispielsweise durch eine Klebverbindung fest angeordnet ist. Dieser Fasergitter-Verformungssensor umfaßt einen Lichtwellenleiter 2, in dem in an sich bekannter Weise eine periodische Brechungsindexstruktur in Form eines Beugungsgitters 3, ein so genanntes Bragg-Gitter, mit Hilfe eines UV-Lasers eingeschrieben ist. Dieses Beugungsgitter 3 besitzt eine Gitterkonstante Λₙ (Lambda n) in der Größenordnung mehrerer Zehntel Mikrometer und erstreckt sich über eine Länge einiger Millimeter in Längserstreckung des Lichtwellenleiters 2. In dem Lichtwellenleiter 2 können auch mehrere solche Beugungsgitter 3 mit gleicher oder auch mit unterschiedlicher Gitterkonstante Λₙ vorgesehen werden. Vorteilhaft ist, wenn diese Beugungsgitter 3 in eine Monomode-Lichtleitfaser mit einem Quarzmantel integriert sind, deren äußerer Durchmesser etwa 0,125 µm beträgt. Die Länge dieser Lichtleitfaser kann viele Meter betragen.

Diese Interferenzgitter wirken wie schmalbandige Filter, die in Abhängigkeit von der Gitterkonstante Licht einer bestimmten Wellenlänge, der so genannten Bragg-Wellenlänge λ_{B}, oder eines bestimmten Wellenlängenbereiches reflektieren. Wird von einer Lichtquelle Licht 4 eines Wellenlängenbereiches (polychromatisches Licht) in den Lichtwellenleiter 2 eingekoppelt, so wird am Beugungsgitter 3 ein Teil des Lichtes 5 einer bestimmten Wellenlänge λ_{B} oder eines bestimmten Wellenlängenbereiches reflektiert. Bei der Verformung des Bauteils 1, wird in Abhängigkeit von dem Verformungsgrad in einem fest daran angeordneten Fasergitter-Verformungssensor Strahlung (Licht) einer bestimmten Wellenlänge oder eines bestimmten Wellenlängenbereiches reflektiert, woraus man die Größe der Verformung (Dehnung oder Stauchung) ermitteln kann. Da sich gleichfalls auch die Länge des Wellenleiters 2 und damit auch die Gitterkonstante Λ mit der Temperatur ändern, kann auch der Einfluß der Temperatur berücksichtigt werden.

In Fig.2 ist stark vereinfacht ein Teil der Schweißanordnung dargestellt. So ist beispielsweise eine Einrichtung 6 einer mehrere Einrichtungen umfassenden Schweißanordnung zu erkennen, an welcher mehrere Halterungen 7 mit jeweils einem festen Teil 8 und einem beweglichen Teil 9 angeordnet sind. Diese Einrichtungen können z.B. elektrische Schweißzangen von Schweißanordnungen sein, an welchen Elektroden 11; 12 tragende Teile 8 und 9 in Form von Schweißzangenarmen angeordnet sind, wobei ein Schweißzangenarm relativ zum anderen Schweißzangenarm schwenkbar ist (veranschaulicht durch einen Doppelpfeil 13) und während des Schweißvorganges mit einer konstanten Kraft P gegen die zwischen den Elektroden angeordneten, zu verbindenden Werkstücke 10 angedrückt wird.

Die Schweißanordnungen können beispielsweise auch Schweißroboter sein, wie sie u.a. in der Autoindustrie eingesetzt werden. An den Teilen 8 und/oder 9 bzw. an den Schweißzangenarmen sind Fasergitter-Verformungssensoren 14, 15 angeordnet, wie sie im Zusammenhang mit Fig.1 beschrieben wurden, z. B. durch eine Klebverbindung fest angeordnet, so daß sie sich bei einer Verformung der Teile 8 oder 9 in gleicher Weise wie diese Teile verformen. Als Verformungen können, je nach Richtung der angreifenden Kräfte, Dehnungen oder Stauchungen der betreffenden Teile auftreten.

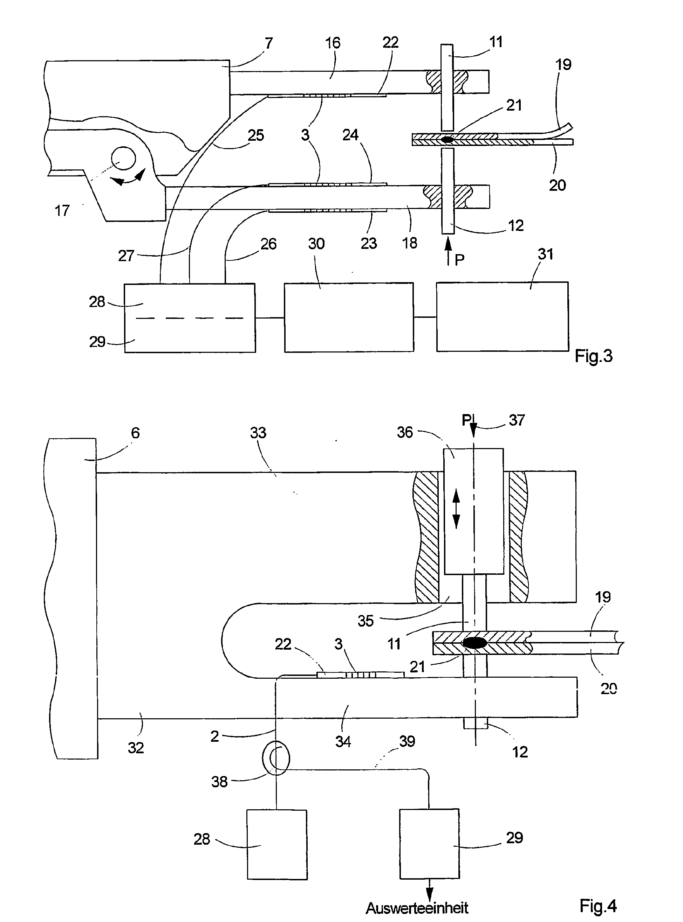

Fig 3 zeigt eine Halterung 7 einer Schweißzange bzw. einer Schweißanordnung, beispielsweise einer elektrischen Punktschweißanordnung, welche als festes Teil einen festen Schweißzangenarm 16 und als bewegliches Teil einen vorteilhaft in einem Gelenk 17 gelagerten, schwenkbaren Schweißzangenarm 18 umfaßt. An den Schweißzangenarmen 16 und 18 ist mindestens jeweils eine Elektrode 11; 12 angeordnet, durch welche der zur Schweißung erforderliche Schweißstrom zugeführt wird. Zwischen den Elektroden sind die zu verbindenden Werkstücke 19 und 20 angeordnet, welche an den vorgesehenen Verbindungsstellen durch den Strom bis zur Verflüssigung erhitzt werden, und auf diese Weise nach Erkalten verbunden werden. An den Verbindungsstellen oder Schweißorten bilden sich so genannte Schweißlinsen 21, die die eigentlichen Verbindungsstellen zwischen den zu verbindenden Teilen darstellen.

An den Schweißzangenarmen 16 und 18 sind die Verformungen dieser Elemente detektierende Fasergitter-Verformungssensoren 22; 23 und 24 der oben erläuterten Art starr befestigt, deren Lichtwellenleiter 25; 26 und 27 einerseits mit einer Lichtquelle 28 (nicht im Einzelnen dargestellt) und andererseits mit einem an sich bekannten Polychromator 29 optisch verbunden sind. Der Polychromator 29 ist mit einer Auswerteeinheit 30 verbunden, welcher vorzugsweise eine Anzeigeeinheit 31 nachgeordnet ist. Das an den Beugungsgittern 3 der Fasergitter-Verformungssensoren 22; 23 und 24 reflektierte Licht wird aus den Lichtwellenleitern 25; 26 und 27 ausgekoppelt und in den Polychromator 29 eingeleitet. Der Polychromator 29 umfaßt in bekannter Weise 3D-Gitter, mit welchem eine wellenlängenabhängige Abbildung des reflektierten Lichtes auf eine fotoelektrische Empfängeranordnung, vorteilhaft in Form einer CCD-Zeile, erfolgt. In einer nachgeordneten Auswerteeinheit 30 erfolgt eine positionsabhängige Verarbeitung der durch die CCD-Zeile erzeugten Signale mit dem Ziel, aus der Bragg-Wellenlänge des reflektierten Lichtes der Fasergitter-Verformungssensoren 22; 23 und 24 die Größe und auch die Art (Dehnung oder Stauchung) der Verformung der betreffenden Schweißzangenarme 16 und 18 zu ermitteln. An einer der Auswerteeinheit 30 nachgeordneten Anzeigeeinheit 31 können die Meßergebnisse angezeigt werden.

In Fig.4 ist eine U-förmige Halterung 32 mit zwei beabstandeten, festen Schenkeln 33 und 34 dargestellt, welche an einer Einrichtung 6 einer Schweißanordnung angeordnet ist, wobei zwischen den beiden Schenkeln 33 und 34 die zu verbindenden Werkstücke 19 und 20 positioniert sind. Im Schenkel 33 ist eine im wesentlichen senkrecht zur Längserstreckung dieses Schenkels 33 verlaufende Führung 35 vorgesehen, in welcher eine Aufnahme 36 für die Elektrode 11 verschiebbar gelagert ist. Eine weitere Elektrode 12 ist als Gegenelektrode im Schenkel 34 der U-förmigen Halterung 32 vorzugsweise fest angeordnet.

Die Elektroden 11 und 12 sind auch bei dieser Ausführung mit einer Stromversorgungseinheit elektrisch verbunden (nicht dargestellt). Zur Ermittlung der Verformung ist beispielsweise an der Innenfläche des Schenkel 34 ein Fasergitter-Verformungssensor 22 mit einem Beugungsgitter 3 befestigt, welcher auch bei dieser Ausführung über einem Lichtwellenleiter 2 einerseits mit der polychromatischen Lichtquelle 28 und andererseits über einen Auskoppler 38 und einen Lichtwellenleiter 39 mit dem Polychromator 29 verbunden ist und mit welchem die Verformung dieses Schenkels 34 beim Schweißvorgang detektiert werden kann. Der Pfeil 37 kennzeichnet die Richtung der Kraft P, mit der die Elektroden 11 und 12 gegen die zu verbindende Werkstücke 19 und 20 gedrückt werden und welche die Verformungen (Biegung) beispielsweise des Schenkels 34 verursacht. Wie auch bei der Ausführung nach Fig.3 können auch an den Schenkeln 33 und 34 mehrere Fasergitter-Verformungssensoren befestigt sein.

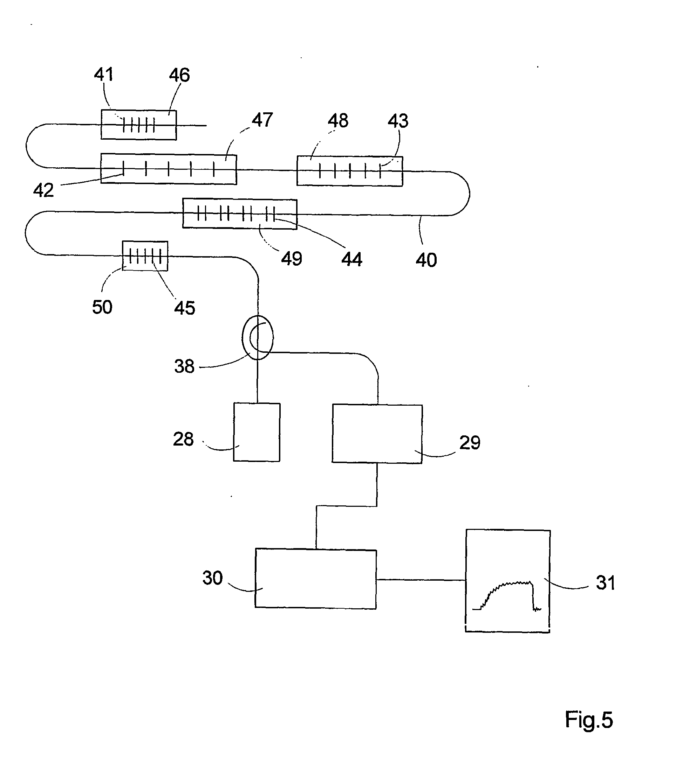

In Fig.5 ist ein als Multiplex-System ausgebildetes Fasergitter-Verformungssensorsystem stark vereinfacht dargestellt, welches mindestens einen Lichtwellenleiter 40 geeigneter Länge mit mehreren eingeschriebenen Beugungsgittern 41 bis 45 umfaßt, wobei diese Beugungsgitter 41 bis 45 gleiche oder unterschiedliche Gitterkonstanten Λₙ umfassen können. Die Sensoren dieses Fasergitter-Verformungssensorsystems sind vorzugsweise an Schweißzangenarmen 46 bis 50 (in Fig.5 als Kästchen dargestellt) fest angeordnet, so daß es mit einer derartigen Ausführung möglich ist, beispielsweise die Verformungen an Teilen mehrerer Schweißzangen gleichzeitig zu überwachen. Wird nun von der Lichtquelle 28 polychromatisches Licht in den Lichtwellenleiter 40 eingekoppelt, so wird an den unterschiedlichen Beugungsgittern 41 bis 45 Licht der jeweils speziellen Bragg-Wellenlänge λ_{Br} reflektiert und durch den Auskoppler 38 aus dem Wellenleiter 40 ausgekoppelt und über den Polychromator 29, in welchem die Signale der Fasergitter-Verformungssensoren getrennt werden, der Auswerteeinheit 30 zur Ermittlung der Verformungen an den Schweißzangenarmen zugeführt. Durch die Anzeigeeinheit 31, die der Auswerteeinheit 30 nachgeordnet ist, werden die Meßwerte an- oder aufgezeichnet.

Zur Prozeßüberwachung und Qualitätssicherung bei Widerstandschweißverfahren für mindestens eine Schweißanordnung werden die während der Stromflußphase an den Schweißzangenarmen 16; 18; 46 bis 50 auftretenden Verformungen ermittelt und ausgewertet, welche durch zusätzliche Kräfte erzeugt werden, die von Volumenvergrößerungen der flüssigen Schweißlinse bedingt sind. Dabei werden die zeitlichen Veränderungen der Verformungen an den Schweißzangenarmen 16; 18; 46 bis 50 oder an den Schenkeln 33; 34 der U-förmigen Halterung 32 mit Hilfe der Fasergitter-Verformungssensoren 14; 15; 22, 23; 24 mit Bezug zum Schweißstromsignal detektiert und der zeitliche Verlauf dieser Schwankungen als Hüllkurve des Verformungssignals bzw. der zeitliche Verlauf der Kraft P(t) an den Schenkeln 33; 34 bzw. an den Schweißzangenarmen 16; 18 durch die Auswerteeinheit 30 ermittelt.

Es wird der zeitabhängige Anstieg der Verformungsschwankungen, welche etwa proportional dem verflüssigten Volumen in der Schweißlinse sind, während der Stromflußphase erfaßt und zur Bewertung der Schweißlinsengröße und damit der Qualität der Schweißverbindung herangezogen. Dabei wird mittels elektronischer Mittel in der Auswerteeinheit 30 durch Ableitung von Steuergrößen aus dem Kraft-Zeit-Signal eine direkte oder indirekte Beeinflussung der Qualität der Schweißung durch Regelung insbesondere des Schweißstroms und der Kraft P während oder nach dem Schweißvorgang realisiert.

Die Erfindung wurde in Bezug auf eine besondere Ausführungsform beschrieben. Es ist für einen Fachmann jedoch selbstverständlich, dass Änderungen und Abwandlungen durchgeführt werden können, ohne den Schutzbereich der nachstehenden Ansprüche zu verlassen.

### Bezugszeichenliste

- 1: Bauteil
- 2: Lichtwellenleiter
- 3: Beugungsgitter
- 4; 5: Licht
- 6: Einrichtung
- 7: Halterung
- 8: festes Teil
- 9: bewegliches Teil
- 10: Werkstück
- 11; 12: Elektrode
- 13: Doppelpfeil
- 14; 15: Fasergitter-Verformungssensoren
- 16: fester Schweißzangenarm
- 17: Gelenk
- 18: schwenkbarer Schweißzangenarm
- 19; 20: Werkstück
- 21: Schweißlinse
- 22; 23; 24: Fasergitter-Verformungssensor
- 25; 26; 27: Lichtwellenleiter
- 28: Lichtquelle
- 29: Polychromator
- 30: Auswerteeinheit
- 31: Anzeigeeinheit
- 32: U-förmige Halterung
- 33; 34: Schenkel
- 35: Führung
- 36: Aufnahme
- 37: Pfeil
- 38: Auskoppler
- 39: Lichtwellenleiter
- 40: Lichtwellenleiter
- 41 bis 45: Beugungsgitter
- 46 bis 50: Schweißzangenarm

## Patentansprüche

1. Schweißanordnung zum Widerstandsschweißen, insbesondere zum Verbinden von Werkstücken durch Schweißen, wobei die zu verbindenden Werkstücke an ihren Verbindungsstellen mit einer Kraft P beaufschlagt und durch Zuführung und/oder Erzeugung von Wärme an diesen Stellen verflüssigt werden, umfassend
- mindestens eine Einrichtung mit mindestens einer Halterung, an welcher ein festes, erstes und ein bewegliches, zweites Teil oder Glied oder mehrere feste und/oder bewegliche Teile angeordnet sind, wobei zwischen den Teilen die zu verbindenden Werkstücke positioniert sind und wobei mindestens eines der beweglichen Teile während des Schweißvorganges mit der in Werkstückrichtung wirkenden Kraft P beaufschlagt ist,
**dadurch gekennzeichnet, daß**
- zur Messung der Verformung mindestens eines der besagten ersten (8) und/oder zweiten Teile (9) mindestens einer Halterung (7; 32) mindestens ein Fasergitter-Verformungssensor (14; 15; 22; 23; 24) vorgesehen ist, welcher am zugeordneten ersten (8) und/oder zweiten Teil (9) fest angeordnet ist,
- dieser mindestens eine Fasergitter-Verformungssensor (14; 15; 22; 23; 24) mit einer Strahlungsquelle (28) und mit einer fotoelektrischen Empfängeranordnung eines Polychromators (29) optisch verbunden ist, und
- die Empfängeranordnung mit einer Auswerteeinheit (30) und/oder mit einem Prozeßüberwachungssystem oder -steuersystem verbunden ist.

2. Schweißanordnung nach Anspruch 1, **dadurch gekennzeichnet, daß**
- der mindestens eine Fasergitter-Verformungssensor (14; 15; 22; 23; 24) als ein Beugungsgitter (3; 41; 42; 43; 44; 45) in Form eines Bragg-Gitters mit periodischer Brechungsindex-Struktur in einem Lichtwellenleiter (2; 39; 40) integriert ist, und
- der Fasergitter-Verformungssensor (14; 15; 22; 23; 24) optisch mit der Empfängeranordnung eines Polychromators (29) verbunden ist.

3. Schweißanordnung nach einem der Ansprüche 1 und 2, **dadurch gekennzeichnet, daß**
- mehrere Fasergitter-Verformungssensoren mit unterschiedlichen oder gleichen Beugungsgittern (41 bis 45) in einem Lichtwellenleiter (40) integriert sind,
- die Fasergitter-Verformungssensoren des Lichtwellenleiters (40) an Teilen (Gliedern) mehrerer Einrichtungen der Schweißanordnung fest angebracht sind, und
- diese Fasergitter-Verformungssensoren mit der Empfängeranordnung eines Polychromators (29) verbunden sind.

4. Schweißanordnung nach Anspruch 2 oder 3, **dadurch gekennzeichnet, daß** die Fasergitter-Verformungssensoren eines Lichtwellenleiters Beugungsgitter (41 bis 45) mit gleicher oder unterschiedlicher Gitterteilung aufweisen.

5. Schweißanordnung nach einem der Ansprüche 1 bis 4, **dadurch gekennzeichnet, daß** der mindestens eine Fasergitter-Verformungssensor in einem Monomode-Lichtwellenleiter integriert ist.

6. Schweißanordnung nach einem der Ansprüche 1 bis 5, **dadurch gekennzeichnet, daß** die Einrichtung eine elektrische Schweißzange ist, die eine Halterung (7) und ein Paar in der Halterung (7) angeordnete, Elektroden (11; 12) tragende Schweißzangenarme (16; 18) besitzt, wobei ein Schweißzangenarm (18) eines jeden Paares relativ zum anderen Schweißzangenarm (16) schwenkbar ist und während des Schweißvorganges gegen die zwischen den Elektroden (11; 12) angeordneten, zu verbindenden Werkstücke (19; 20) mit einer definierten Kraft P angedrückt ist.

7. Schweißanordnung nach einem der Ansprüche 1 bis 5, **dadurch gekennzeichnet, daß**
- die Einrichtung (6) mindestens eine U-förmige Halterung (32) mit jeweils einem Paar Elektroden (11; 12) aufnehmender Schenkel (33; 34) umfaßt, wobei ein Schenkel (33) eines Paares in einer Führung (35) eine Aufnahme (36) für eine Elektrode (11) besitzt, und
- die Aufnahme (36) in der Führung (35) relativ zum anderen Schenkel (34) des Paares im wesentlichen senkrecht verschiebbar und während des Schweißvorganges gegen die zwischen den Elektroden (11; 12) angeordneten, zu verbindenden Werkstücke (19; 20) mit einer definierten Kraft P angedrückt ist.

8. Schweißanordnung nach einem der Ansprüche 1 bis 5, **dadurch gekennzeichnet, daß** die Fasergitter-Verformungssensoren (14; 15; 22; 23; 24) als Dehnungs- oder Stauchungssensoren ausgebildet sind.

9. Schweißanordnung nach einem der Ansprüche 1 bis 5, **dadurch gekennzeichnet, daß** in der Auswerteeinheit (29) Mittel vorgesehen sind, mit denen durch Ableitung von Steuergrößen aus dem ermittelten, zeitabhängigen Kraftsignal P(t) eine Beeinflussung der Qualität der Schweißung durch Regelung insbesondere des Schweißstroms und der Anpreßkraft während oder nach dem Schweißvorgang realisierbar ist.

10. Anwendung von Fasergitter-Verformungssensoren zur zeitbezogenen Messung und Überwachung der Verformungen von Elektrodenarmen von Schweißanordnungen zum Widerstandsschweißen zwecks Ermittlung der Schweißpunktqualität und der Güte der Schweißverbindung.

## Claims

1. A welding arrangement for resistance welding, especially for joining workpieces by welding, in which the workpieces to be joined are subjected to a force P in the junction areas and are liquefied in these areas by feeding and/or generation of heat, comprising
- at least one apparatus with at least one holding means, at which a fixed first and a movable second component or link or several fixed and/or movable components are arranged, with the workpieces to be joined being arranged between the said components, and with at least one of the movable components being subjected to the force P acting in the direction of the workpieces during the welding process,
**characterized in that**
- for measuring the deformation of at least one of the said first (8) and/or second components (9) of at least one holding means (7, 32), at least one fibre-grating distortion sensor (14, 15, 22, 23, 24) is provided, which is permanently arranged at the correlated first (8) and/or second component (9), and
- this at least one fibre-grating distortion sensor (14, 15, 22, 23, 24) is optically connected with a radiation source (28) and a photoelectric receiver arrangement of a polychromator (29), and
- the receiver arrangement is connected with an evaluation unit (30) and/or a process monitoring or process control system.

2. A welding arrangement as claimed in Claim 1, **characterized in that**
- the at least one fibre-grating distortion sensor (14, 15, 22, 23, 24) is integrated in an optical waveguide (2, 39, 40) as a diffraction grating in the form of a Bragg grating with a periodic refractive index structure, and
- the fibre-grating distortion sensor (14, 15, 22, 23, 24) is optically connected with the receiver arrangement of a polychromator (29).

3. A welding arrangement as claimed in Claim 1 or 2, **characterized in that**
- several fibre-grating distortion sensors with differing or identical diffraction gratings (41 through 45) are integrated in one optical waveguide (40), and
- the fibre-grating distortion sensors of the optical waveguide (40) are permanently fixed to the components (links) of several apparatuses of the welding arrangement, and
- these fibre-grating distortion sensors are connected with the receiver arrangement of a polychromator (29).

4. A welding arrangement as claimed in Claim 2 or 3, **characterized in that** the fibre-grating distortion sensors of an optical waveguide comprise diffraction gratings (41 through 45) of identical or differing grating ruling.

5. A welding arrangement as claimed in any one of Claims 1 through 4, **characterized in that** the at least one fibre-grating distortion sensor is integrated in a monomode optical waveguide.

6. A welding arrangement as claimed in any one of Claims 1 through 5, **characterized in that** the said apparatus is an electrical plier welding head, which comprises a holding means (7) and a pair of welding tongs (16, 18) arranged in the holding means (7) and bearing electrodes (11, 12), in which one welding tong (18) of each pair is tiltable relative to the other welding tong (16) and, during the welding process, is pressed with a defined force P against the workpieces (19, 20) to be joined, which are arranged between the electrodes (11, 12).

7. A welding arrangement as claimed in any one of Claims 1 through 5, **characterized in that**
- the apparatus (6) comprises at least one U-shaped holding means (32), each with a pair of legs (33, 34) to receive electrodes (11, 12), in which one leg (33) of a pair has, in a guideway (35), a mount (36) for an electrode (11), and
- the mount (36) can be shifted in the guideway (35), essentially vertically, relative to the other leg (34) of the pair, and, during the welding process, is pressed with a defined force P against the workpieces (19, 20) to be joined, which are arranged between the electrodes (11, 12).

8. A welding arrangement as claimed in as claimed in any one of Claims 1 through 5, **characterized in that** the fibre-grating distortion sensors (14, 15, 22, 23, 24) are designed as expansion or compression sensors.

9. A welding arrangement in any one of Claims 1 through 5, **characterized in that** the evaluation unit (29) is provided with means by which, with control variables derived from the ascertained time-dependent force signal P(t), the welding quality can be influenced by controlling especially the welding current and the pressure force during or after the welding process.

10. Application of fibre-grating deformation sensors for the time-related measurement and monitoring of the deformations of the electrode-bearing tongs of welding arrangements for resistance welding, for the purpose of ascertaining the quality of the welding spot and the welded joint.

## Revendications

1. Ensemble de soudage pour soudage par résistance, en particulier pour raccorder des pièces à travailler par soudage, les pièces à travailler à raccorder étant sollicitées par une force P au niveau de leurs points de raccordement et liquéfiées au niveau de ces points par un apport et/ou une génération de chaleur, comprenant
- au moins un dispositif avec au moins une fixation à laquelle une première partie ou un premier organe fixe et une deuxième partie ou un deuxième organe mobile ou plusieurs parties fixes et/ou mobiles sont disposés, les pièces à travailler à raccorder étant positionnées entre les parties, et au moins l'une des parties mobiles étant sollicitée pendant l'opération de soudage par la force P agissant dans le sens de la pièce à travailler,
**caractérisé en ce que**
- pour mesurer la déformation d'au moins l'une desdites première (8) et/ou deuxième (9) parties d'au moins une fixation (7 ; 32), au moins un capteur de déformation à fibre optique (14 ; 15 ; 22 ; 23 ; 24) est prévu qui est disposé solidement sur la première (8) et/ou deuxième partie (9) associée(s),
- ledit au moins un capteur de déformation à fibre optique (14 ; 15 ; 22 ; 23 ; 24) est connecté de façon optique à une source de rayonnement (28) et à un ensemble de récepteur photoélectrique d'un polychromateur (29), et
- l'ensemble de récepteur est connecté à une unité d'évaluation (30) et/ou à un système de surveillance ou système de commande de processus.

2. Ensemble de soudage selon la revendication 1, **caractérisé en ce que**
- ledit au moins un capteur de déformation à fibre optique (14 ; 15 ; 22 ; 23 ; 24) est intégré dans un guide d'ondes optiques (2 ; 39 ; 40) comme un réseau de diffraction (3 ; 41 ; 42 ; 43 ; 44 ; 45) sous la forme d'un réseau de Bragg à structure d'indice de réfraction périodique, et
- le capteur de déformation à fibre optique (14 ; 15 ; 22 ; 23 ; 24) est connecté de façon optique à l'ensemble de récepteur d'un polychromateur (29).

3. Ensemble de soudage selon l'une quelconque des revendications 1 à 2, **caractérisé en ce que**
- plusieurs capteurs de déformation à fibre optique avec des réseaux de diffraction différents ou identiques (41 à 45) sont intégrés dans un guide d'ondes optiques (40),
- les capteurs de déformation à fibre optique du guide d'ondes optiques (40) sont fixés solidement aux parties (organes) de plusieurs dispositifs de l'ensemble de soudage, et
- ces capteurs de déformation à fibre optique sont connectés à l'ensemble de récepteur d'un polychromateur (29).

4. Ensemble de soudage selon les revendications 2 ou 3, **caractérisé en ce que** les capteurs de déformation à fibre optique d'un guide d'ondes optiques présentent des réseaux de diffraction (41 à 45) avec un pas de réseau identique ou différent.

5. Ensemble de soudage selon l'une quelconque des revendications 1 à 4, **caractérisé en ce que** ledit au moins un capteur de déformation à fibre optique est intégré dans un guide d'ondes optiques monomode.

6. Ensemble de soudage selon l'une quelconque des revendications 1 à 5, **caractérisé en ce que** le dispositif est une pince à souder électrique possédant une fixation (7) et une paire de bras de pince à souder (16 ; 18) disposés dans la fixation (7) et portant des électrodes (11 ; 12), dans lequel un bras de pince à souder (18) de chaque paire est pivotant par rapport à l'autre bras de pince à souder (16) et est plaqué pendant l'opération de soudage contre les pièces à travailler (19 ; 20) à raccorder, disposées entre les électrodes (11 ; 12), avec une force définie P.

7. Ensemble de soudage selon l'une quelconque des revendications 1 à 5, **caractérisé en ce que**
- le dispositif (6) comprend au moins une fixation (32) en forme de U avec respectivement une paire de branches (33 ; 34) recevant des électrodes (11 ; 12), une branche (33) d'une paire possédant dans une coulisse (35) un logement (36) pour une électrode (11), et
- le logement (36) est mobile dans la coulisse (35) par rapport à l'autre branche (34) de la paire de façon substantiellement verticale, et plaqué pendant l'opération de soudage contre les pièces à travailler (19 ; 20) à raccorder, disposées entre les électrodes (11 ; 12), avec une force définie P.

8. Ensemble de soudage selon l'une quelconque des revendications 1 à 5, **caractérisé en ce que** les capteurs de déformation à fibre optique (14 ; 15 ; 22 ; 23 ; 24) sont réalisés comme des capteurs d'allongement ou d'écrasement.

9. Ensemble de soudage selon l'une quelconque des revendications 1 à 5, **caractérisé en ce que** dans l'unité d'évaluation (29) des moyens sont prévus qui, par dérivation de variables de commande à partir du signal de force déterminé, variable dans le temps, P(t), permettent d'exercer une influence sur la qualité du soudage en régulant en particulier le courant de soudage et la force de pression pendant ou après l'opération de soudage.

10. Utilisation de capteurs de déformation à fibre optique pour la mesure et la surveillance dans le temps des déformations de bras d'électrodes d'ensembles de soudage pour soudage par résistance en vue de déterminer la qualité des points de soudage et la qualité de l'assemblage par soudage.
